# EUROPEAN PATENT SPECIFICATION

(11) **EP 3 011 388 B1**
(45) Date of publication and mention of the grant of the patent: **29.04.2020**
(21) Application number: 14813780.5
(22) Date of filing: 17.06.2014
(51) Int. Cl.: G02F 1/153, B32B 17/10, C03C 17/34

(54) **ELECTROCHROMIC DEVICES AND MANUFACTURING METHODS THEREFORE**
ELEKTROCHROME VORRICHTUNGEN UND HERSTELLUNGSVERFAHREN DAFÜR
DISPOSITIFS ÉLECTROCHROMIQUES ET PROCÉDÉS DE FABRICATION ASSOCIÉS

(30) Priority: 20.06.2013 SE 1350755
(43) Date of publication of application: 27.04.2016
(73) Proprietor: ChromoGenics AB, 752 28 Uppsala (SE)
(72) Inventor: GREGARD, Greger, SE-756 51 Uppsala (SE); VOGT, Roger, SE-753 24 Uppsala (SE)
(74) Representative: Aros Patent AB
(86) International application number: PCT/SE2014/050731
(87) International publication number: WO 2014/204387

(56) References cited:
- WO-A1-2008/013501
- GB-A- 1 315 489
- US-A- 5 985 486
- US-A- 6 160 655
- US-A1- 2004 067 343
- US-A1- 2004 191 618
- US-A1- 2009 279 004
- US-A1- 2009 323 159
- US-A1- 2013 010 347
- US-B1- 7 710 671

## Description

### TECHNICAL FIELD

The present invention relates in general to electrochromic devices and in particular to layered electrochromic devices and manufacturing methods therefore.

### BACKGROUND

Electrochromic devices are today used for many different applications, where a selective transmittance is requested. Typical examples are e.g. window glass panes, visors and vehicle mirrors. An electrochromic device is typically composed of a number of thin layers comprising electrochromic material, electrode layers and electrolytes. By applying a voltage between different layers of such a device, a transmittance through the device may be altered.

One of the most successful electrochromic device types is based on the use of solid electrochromic layers. The electrochromic material is here typically a metal oxide, e.g. TiO or NiO. By changing the charge condition of a thin layer of such a solid electrochromic material, the transmittance of the layer can be altered. The solid electrochromic material is typically comprised in a layered structure, as indicated above.

In one approach to manufacture electrochromic devices attached to large-area glass panes, the layers of the electrochromic device are deposited directly on the glass pane. One example of such an approach is found in the US patent 5,985,486 A1. There, an electrochemical device is disclosed, which includes at least one substrate, typically of glass, an electronically conductive layer, an electrochemically active layer and an electrolyte. The electrolyte comprises one layer of essentially inorganic material, of the oxide type. In other words, the glass pane itself is used as a substrate for the layer deposition. One disadvantage with such an approach is that since glass panes are relatively heavy, the construction of the glass panes is preferably made more or less locally with respect to the final site of use. The expensive deposition equipment has therefore also to be provided locally, i.e. in many sites, which becomes very costly. Also, the outer surface of the electrochromic device has to be protected against wear and damages, which means that additional covering layers have to be provided.

In another approach, e.g. described in the published international patent application WO 2008/013501, an electrochromic device is produced as a sandwich film structure between two polymer sheet substrates. An electrochromic device of such a type can be referred to as a solid-electrochromic-layer layered polymer-based structure. Such a structure is of low weight and is still robust enough to be transported. However, if such an electrochromic device is to be applied to a glass pane, there are additional concerns about how to attach the film to the surface of the glass pane. Adhesion substances may e.g. introduce encapsulation of bubbles between the glass pane and the electrochromic device.

The published US patent application US 2009/0323159 A1 discloses an all solid state type reflection light control electrochromic element employing magnesium/titanium alloy and light control member. A multilayer thin film is formed on a transparent substrate.

### RELATED ART

The published patent specification GB 1 315 489 discloses glass laminates. In the process for production of safety glass, two sheets of glass are bonded to a sheet of plastic film sandwiched between them by a copolymer of ethylene having a melting point below that of the film.

The published US patent application US 2009/0279004 A1 discloses a laminated glazing incorporating a liquid crystal film.

### SUMMARY

An object of the present invention is thus to find an economically favourable and quality ensuring way to manufacture glass panes covered with electrochromic devices of solid-electrochromic-layer layered polymer-based structures.

The above object is achieved by devices and methods according to the enclosed independent patent claims. Preferred embodiments are defined in the dependent claims. In general words, in a first aspect, a method for manufacturing of laminated electrochromic devices comprises providing of a solid-electrochromic-layer layered polymer-based structure. The solid-electrochromic-layer layered polymer-based structure is positioned between a first glass pane and a second glass pane, with a respective interlayer film between each side of the solid-electrochromic-layer layered polymer-based structure and the first glass pane and the second glass pane, respectively, forming a stack. The stack is exposed to a lamination temperature, which preferably is at most 120°C, for a hot lamination time period. The stack is cooled-down at atmospheric pressure after the hot lamination time period. The step of providing a solid-electrochromic-layer layered polymer-based structure comprises the part steps of providing a first polymer substrate sheet, covering, at least partially, a side of the first polymer substrate sheet with a first electron conducting layer, depositing a first solid electrochromic layer for at least partially covering said first electron conducting layer, providing a second polymer substrate sheet, covering, at least partially, a side of the second polymer substrate sheet with a second electron conducting layer, depositing a solid counter electrode layer for at least partially covering the second electron conducting layer, and providing an electrolyte layer between, and at least partially covering, the first electrochromic layer and the counter electrode layer. The electrolyte layer is an ion conducting interlayer film.

In a second aspect, a laminated electrochromic device comprises a solid-electrochromic-layer layered polymer-based structure, a first glass pane and a second glass pane. The solid-electrochromic-layer layered polymer-based structure is laminated between the first glass pane and the second glass pane, with a respective interlayer film between each side of the solid-electrochromic-layer layered polymer-based structure and the first glass pane and the second glass pane, respectively. The solid-electrochromic-layer layered polymer-based structure comprises a first polymer substrate sheet, a first electron conducting layer at least partially covering a side of the first polymer substrate sheet, a first solid electrochromic layer deposited for at least partially covering the first electron conducting layer, a second polymer substrate sheet, a second electron conducting layer at least partially covering a side of the second polymer substrate sheet, a solid counter electrode layer deposited for at least partially covering the second electron conducting layer, and an electrolyte layer provided between, and at least partially covering, the first electrochromic layer and the counter electrode layer. The electrolyte layer is an ion conducting interlayer film.

One advantage of the present ideas is that glass panes provided with electrochromic devices comprising a solid-electrochromic-layer layered polymer-based structure can be manufactured by relatively simple means, which enables local manufacturing to low costs. Other general advantages as well as advantages of particular embodiments are further discussed in connection with the detailed description.

### BRIEF DESCRIPTION OF THE DRAWINGS

The invention, together with further objects and advantages thereof, may best be understood by making reference to the following description taken together with the accompanying drawings, in which:
FIG. 1 is a flow diagram of steps of an embodiment of a method for manufacturing of laminated electrochromic devices;
FIG. 2 is a flow diagram of part steps of an embodiment of step 210 of Fig. 1;
FIG. 3 is a schematic cross-sectional view of an embodiment of a stack of a solid-electrochromic-layer layered polymer-based structure between glass panes ready for lamination;
FIG. 4 illustrates time and temperature aspects during an embodiment of a lamination process;
FIG. 5 is a schematic cross-sectional view of another embodiment of a stack of a solid-electrochromic-layer layered polymer-based structure between glass panes ready for lamination;
FIG. 6 illustrates time and temperature aspects during another embodiment of a lamination process;
FIG. 7 is a schematic cross-sectional view of yet another embodiment of a stack of a solid-electrochromic-layer layered polymer-based structure between glass panes ready for lamination;
FIGS. 8-9 illustrate time and temperature aspects during yet other embodiments of lamination processes;
FIGS. 10A-C illustrate the effect of edge bending and approaches for mitigating such effects;
FIGS. 11A-B are schematic partial cross-sectional views of embodiments of stacks of solid-electrochromic-layer layered polymer-based structures between glass panes;
FIG. 12 is a flow diagram of steps of another embodiment of a method for manufacturing of laminated electrochromic devices;
FIGS. 13A-C are schematic cross-sectional views of embodiments of stacks of solid-electrochromic-layer layered polymer-based structures between glass panes ready for lamination and after lamination, respectively;
FIGS. 14A-B are schematic illustrations of the penetration of contacts into half-cells surfaces during lamination;
FIG. 15 is a schematic cross-sectional view of another embodiment of a stack of solid-electrochromic-layer layered polymer-based structure between glass panes ready for lamination;
FIG. 16 is a schematic partial cross-sectional view of yet another embodiment of a stack of solid-electrochromic-layer layered polymer-based structure between glass panes ready for lamination; and
FIG. 17 is a flow diagram of steps of yet another embodiment of a method for manufacturing of laminated electrochromic devices.

### DETAILED DESCRIPTION

Throughout the drawings, the same reference numbers are used for similar or corresponding elements.

It is an advantage to have an electrochromic device comprising a solid-electrochromic-layer layered polymer-based structure laminated between two glass panes. The glass panes serve as damage and wear protection at the same time as the entire laminated stack is provided as one single unit. The laminated stack provides a very good protection against damages, such as scratches, on the electrochromic device. Furthermore, the lamination process has been found to provide high-quality adhesion solutions as well. Besides these mechanical wear properties, it has been found that the laminated products present an improved optical quality. For instance, a tendency for polymer based electrochromic films to adapt a slight wavy surface appearance is removed. Furthermore, the lamination of the electrochromic films also provides glass panes with safety glass properties. The laminated electrochromic film and glass pane structure also provides noise reduction properties.

However, it was not obvious from the technology disclosed in prior art if lamination of solid-electrochromic-layer layered polymer-based structure at all is possible. The electrolyte and/or the interface between the electrolyte and the solid electrochromic layers are, as such, relatively chemically instable, and exposure to high temperatures will typically alter the electrochromic properties. Interlayer films used in other types of glass lamination are stated to need relatively high temperatures to provide a proper lamination, which temperatures are unsuitable for exposure to the solid-electrochromic-layer layered polymer-based structure. The electrolyte that traditionally is used in solid-electrochromic-layer layered polymer-based structures is known to present a high out-gassing rate, in particular in vacuum and at high temperatures. Lamination according to standard glass lamination schemes in general is therefore ruled out.

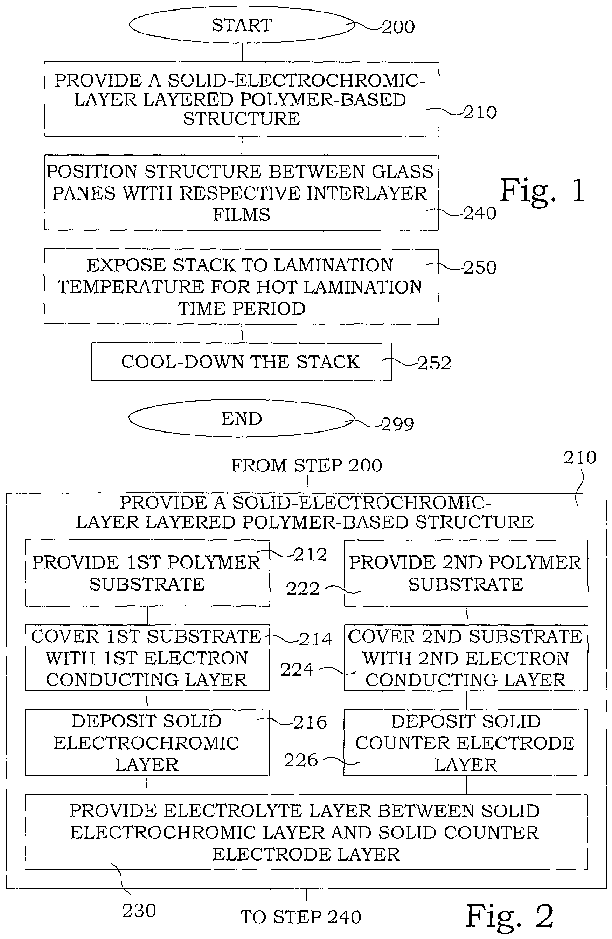

Despite the discouraging prior-art knowledge, there has been found procedures in which solid-electrochromic-layer layered polymer-based structures successfully have been laminated between two glass panes. Fig. 1 illustrates a flow diagram of an embodiment of a method for manufacturing of laminated electrochromic devices. The process starts in step 200. In step 210, a solid-electrochromic-layer layered polymer-based structure is provided. In step 240, the solid-electrochromic-layer layered polymer-based structure is positioned between a first glass pane and a second glass pane, with a respective interlayer film between each side of the solid-electrochromic-layer layered polymer-based structure and the first glass pane and the second glass pane, respectively, forming a stack. In other words, the stack consists of, in order, the first glass pane, an interlayer film, the solid-electrochromic-layer layered polymer-based structure, another interlayer film and the second glass pane. In step 250, the stack is exposed to a lamination temperature, in this embodiment being at most 120°C, for a hot lamination time period. In a preferred embodiment, the highest temperature during the hot lamination time period is at the most 110°C. In a preferred embodiment, the hot lamination time period corresponds to the time period in which the stack is exposed to a temperature above 85°C, and the duration of the hot lamination time period is in this embodiment preferably at most 60 minutes, more preferably at most 45 minutes, most preferably at most 30 minutes. Preferably, the hot lamination time period is at least 15 minutes. In step 252, the stack is cooled-down at atmospheric pressure after the hot lamination time period. The process ends in step 299.

In an alternative embodiment, step 252 comprises cooling down of the stack at a pressure higher than atmospheric pressure.

Fig. 2 illustrates a part flow diagram of an embodiment of part steps of the step 210 of providing a solid-electrochromic-layer layered polymer-based structure. In the first part step, step 212, a first polymer substrate sheet is provided. In step 214, a side of the first polymer substrate sheet is, at least partially, covered with a first electron conducting layer. In step 216, a first solid electrochromic layer is deposited for at least partially cover the first electron conducting layer. In step 222, a second polymer substrate sheet is provided. In step 224 a side of the second polymer substrate sheet is, at least partially, covered with a second electron conducting layer. In step 226, a solid counter electrode layer is deposited for at least partially cover the second electron conducting layer. In step 230, an electrolyte layer is provided between, and at least partially covering, the first electrochromic layer and the counter electrode layer.

The above described method embodiments thus give laminated electrochromic devices comprising a solid-electrochromic-layer layered polymer-based structure a first glass pane and a second glass pane. The solid-electrochromic-layer layered polymer-based structure is thereby laminated between the first glass pane and the second glass pane, with a respective interlayer film between each side of the solid-electrochromic-layer layered polymer-based structure and the first glass pane and the second glass pane, respectively.

A preferred embodiment of a laminated electrochromic device has a solid-electrochromic-layer layered polymer-based structure which comprises a first polymer substrate sheet, a first electron conducting layer, a first solid electrochromic layer, a second polymer substrate sheet, a second electron conducting layer, a solid counter electrode layer and an electrolyte layer. The first electron conducting layer at least partially covers a side of the first polymer substrate sheet. The first solid electrochromic layer is deposited for at least partially covering the first electron conducting layer. The second electron conducting layer at least partially covers a side of the second polymer substrate sheet. The solid counter electrode layer is deposited for at least partially covering the second electron conducting layer. The electrolyte layer is provided between, and at least partially covering, the first electrochromic layer and the counter electrode layer.

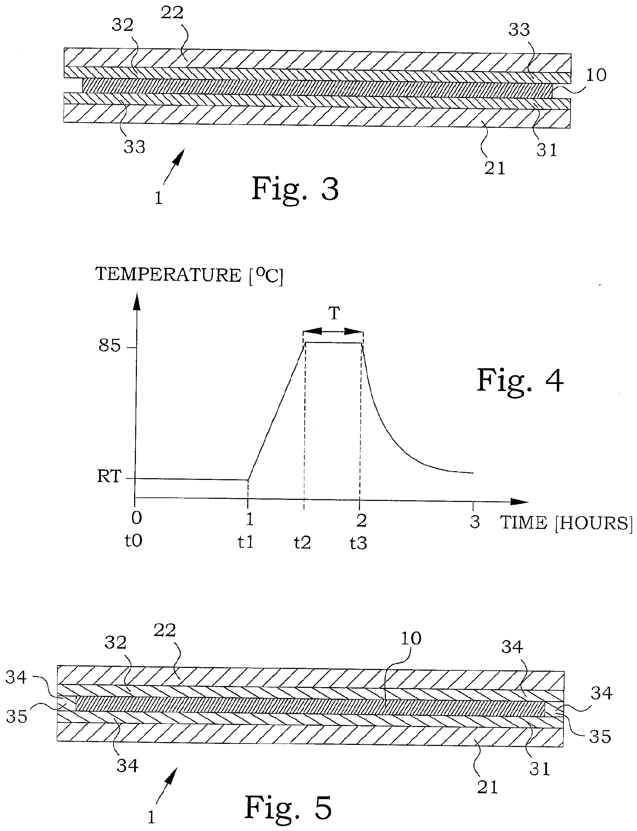

In one embodiment, a solid-electrochromic-layer layered polymer-based structure 10, preferably provided according to the flow diagram of Fig. 2, was positioned in a stack 1 according to a schematic cross-sectional view of Fig. 3. Note that the thicknesses of the different layers are not drawn at the same scale. The stack 1 comprises a first glass pane 21, on which a first interlayer film 31 is provided. In this embodiment, the first interlayer film 31 is an Ethylene Vinyl Acetate (EVA) film 33 or at least an interlayer film based on EVA. The solid-electrochromic-layer layered polymer-based structure 10 is placed on top of the first interlayer film 31, and is itself covered with a second interlayer film 32. In this embodiment, the second interlayer film 32 is also an EVA film 33. The second interlayer film 32 is finally covered by a second glass pane 22. There is, in the present embodiment, no edge sealing of the solid-electrochromic-layer layered polymer-based structure 10 before lamination. It has been found that the lamination is operating well also without edge sealing, at least if the outgassing times and lamination times are relatively limited. Since edge sealing introduces additional procedural steps, it is preferred not to provide such sealings. However, in alternative embodiments, edge sealing of the solid-electrochromic-layer layered polymer-based structure 10 may be provided.

The stack is placed in a vacuum bag, which then is sealed, and the pressure is reduced. Alternative approaches for sealing the space around the stack can also be used. Non-limiting examples are vacuum rings, vacuum mats or vacuum sheets placed around the stack. In such arrangements, the edges can be sealed e.g. by applying clamping devices or the vacuum mats could simply be folded at the edges whereby the vacuum itself could provide the sealing forces. The pressure within the bag is lowered to a level below at least 600 mbar, more preferably below 100 mbar and most preferably below 20 mbar. In this particular embodiment, a typical pressure of 10-20 mbar was used. The pumping continues at room temperature RT for about 60 minutes for removing at least parts of any trapped air. The required pumping time depends on the amount of material placed within the vacuum sealing and has to be adjusted accordingly. Thereafter, the actual lamination temperature treatment starts. The temperature treatment is illustrated by the diagram of Fig. 4. At time t0, the stack was sealed within the vacuum bag. At time t1, the vacuum bag with the stack was placed in an oven and a ramping of the temperature started. In alternative embodiment, the removal of trapped air can also be performed within the oven, but without any heating. The temperature was ramped up to slightly above 85°C during a time of about 30 minutes, until time t2. The temperature was then kept at 85°C between times t2 and t3. After the hot lamination time period, the stack was removed from the oven and from the vacuum bag. The stack was actively cooled by blowing cold air onto both sides of the stack. Without the forced cooling-down, the EVA could at some occasions assume a not entirely transparent appearance. In particular, the value of haze could in such cases reach non-preferred levels. The stack was thus kept at a temperature of above 85°C during a hot lamination time period, denoted by T in the figure, which is slightly longer than 30 minutes, but at least clearly less than 45 minutes.

In another embodiment, a solid-electrochromic-layer layered polymer-based structure 10, preferably provided according to the flow diagram of Fig. 2, was positioned in a stack 1 according to a schematic cross-sectional view of Fig. 5. Note that the thicknesses of the different layers are not drawn in the same scale. The stack 1 is similar to the one of Fig. 3, and only differences will be discussed. In the embodiment of Fig. 5, both the first interlayer film 31 and the second interlayer film 32 comprise PolyVinyl Butyral (PVB) 34. The solid-electrochromic-layer layered polymer-based structure 10 is furthermore encircled at its edges by a material compensating rim 35, in this embodiment also made from PVB 34.

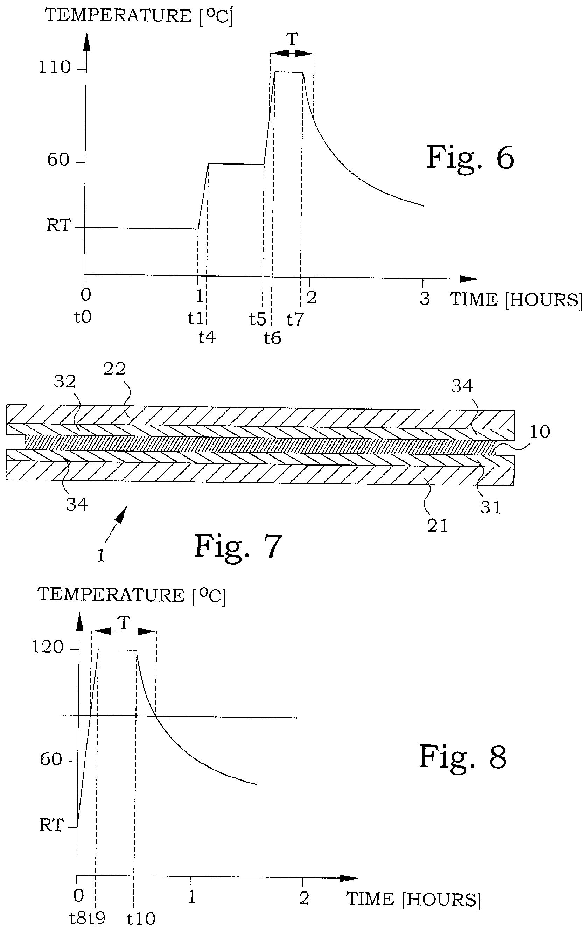

The stack is placed in a vacuum bag or corresponding sealing device, which then is sealed, and the pressure is reduced. Preferably, the pressure within the bag is lowered to a level below 600 mbar, more preferably below 100 mbar, and most preferably below 20 mbar. The pumping continues at room temperature RT for about 60 minutes. Also this time is dependent on the amount of material placed in the vacuum bag and is in principle batch specific. Thereafter, the actual lamination temperature treatment starts. The temperature treatment is illustrated by the diagram of Fig. 6. At time t0, the stack was sealed within the vacuum bag. At time t1, the vacuum bag with the stack was placed in an oven and a ramping of the temperature started. The temperature was quickly ramped up to about 60°C, until time t4. The temperature was then kept at 60°C between times t4 and t5, about 30 minutes. This pre-heating was intended to give the entire stack a relatively homogeneous temperature far below any risk temperatures for the solid electrochromic materials, and below the temperature necessary for lamination with PVB, but still considerably closer than room temperature. After the temperature equalization period ending at time t5, the temperature was increased relatively rapidly up to about 110°C, at time t6. The temperature was kept at 110°C for about 15 minutes, until time t7. After this, the stack was optionally removed from the oven and was allowed to cool off. The stack was thus kept at a temperature of above 85°C during a hot lamination time period, denoted by T in the figure, which is longer than 15 minutes, but at least clearly less than 30 minutes. At least some stacks with interlayer films based on PVB are possible to process at lamination temperatures above 120°C, however, it is still preferred to keep the lamination temperature below this limit, since it is believed that the ageing properties of the ECD may be better preserved.

As mentioned above, in this particular embodiment, a material compensating rim 35 is introduced. It has been found that during the lamination process, the first interlayer film 31 and the second interlayer film 32 typically merge together at the edges, thus providing a sealing of the solid-electrochromic-layer layered polymer-based structure 10. This is a beneficial behaviour which improves the protection against air and moisture in the final product. In other words, the here presented glass lamination process constitutes at the same time a sealing procedure, in which the solid-electrochromic-layer layered polymer-based structure 10 becomes sealed against air and moisture. However, at the same time, there are in some experiments seen that the solid-electrochromic-layer layered polymer-based structure 10 itself can be affected mechanically and or geometrically. The result can in some cases be that the electrochromic properties are not uniform all the way to the edge. The introduction of the material compensating rim 35 provides an extra source of material which reduces the risks for disturbing the properties of the solid-electrochromic-layer layered polymer-based structure 10 during the lamination. Typically, as illustrated in the present embodiment, the thickness of the material compensating rim 35 is similar to the thickness of the solid-electrochromic-layer layered polymer-based structure 10.

In alternative embodiment, the material compensating rim 35 may be omitted, in particular for applications where absence of edge distortions is not of crucial importance.

In another embodiment, a solid-electrochromic-layer layered polymer-based structure 10, preferably provided according to the flow diagram of Fig. 2, was positioned in a stack 1 according to a schematic cross-sectional view of Fig. 7. Note that the thicknesses of the different layers are not drawn in the same scale. The stack 1 is similar to the one of Fig. 3. The main difference of the stack 1 is that both the first interlayer film 31 and the second interlayer film 32 comprise PVB 34. There is, in the present embodiment, no material compensating rim around the solid-electrochromic-layer layered polymer-based structure 10. In alternative embodiments, however, material compensating rims may be used. There is, in the present embodiment, no edge sealing of the solid-electrochromic-layer layered polymer-based structure 10 before lamination.

In this embodiment, the pre-treatment by vacuum pumping as used in the earlier embodiments, is replaced by a roll treatment. The stack is thus forced between a pair of nip rolls that are pushed towards each other. The pressure between the nip rolls are adapted not to destroy the structural properties of the solid-electrochromic-layer layered polymer-based structure, but high enough to reduce the amount of remaining air pockets. The stack is thereafter placed in an autoclave equipment, which then is sealed, and the pressure is increased. Preferably, the pressure within the autoclave is kept at level above 8 bars, and more preferably above 10 bars, and typically at 12 bars. Thereafter, the actual lamination temperature treatment starts. The temperature treatment is illustrated by the diagram of Fig. 8. At time t8, the stack was put into the autoclave and a ramping of the temperature started. The temperature was rapidly ramped directly up to about 120°C, until time t9. The temperature was then kept at 120°C between times t9 and t10, about 20 minutes. After this, the stack was optionally removed from the autoclave and was allowed to cool off. The cooling off is therefore in different embodiments performed either at atmospheric pressure or at a pressure higher than atmospheric pressure. The stack was thus kept at a temperature of above 85°C during a hot lamination time period, denoted by T in the figure, which is longer than 30 minutes, but at least clearly less than 40 minutes.

In another embodiment, pre-treatment in vacuum can be combined with an autoclave process. In such an embodiment, the PVB stack was put into a vacuum enclosure, e.g. vacuum mats, and the air is removed. The entire vacuum enclosure is put into an autoclave and the vacuum is allowed to operate for 30-60 minutes at room temperature. The pressure in the autoclave is then increased, in a particular embodiment to 12 bars, and the temperature is increased up to 110°C. The vacuum is still present within the vacuum enclosure during this heating. Optionally, the vacuum may also be present during an additional time of e.g. 10 minutes. The vacuum is then released and the stack is kept at 110°C at 12 bars for an additional time, in one particular embodiment 15-45 minutes. As will be discussed further below, this will allow the glass to relax. The pressure is finally removed and the stack is allowed to cool down. Alternatively, the cooling down can take place at a pressure higher than atmospheric pressure, e.g. in the present embodiment at 12 bars.

In yet another embodiment, a solid-electrochromic-layer layered polymer-based structure 10, preferably provided according to the flow diagram of Fig. 2, was positioned in a stack 1 again according to the schematic cross-sectional view of Fig. 7.

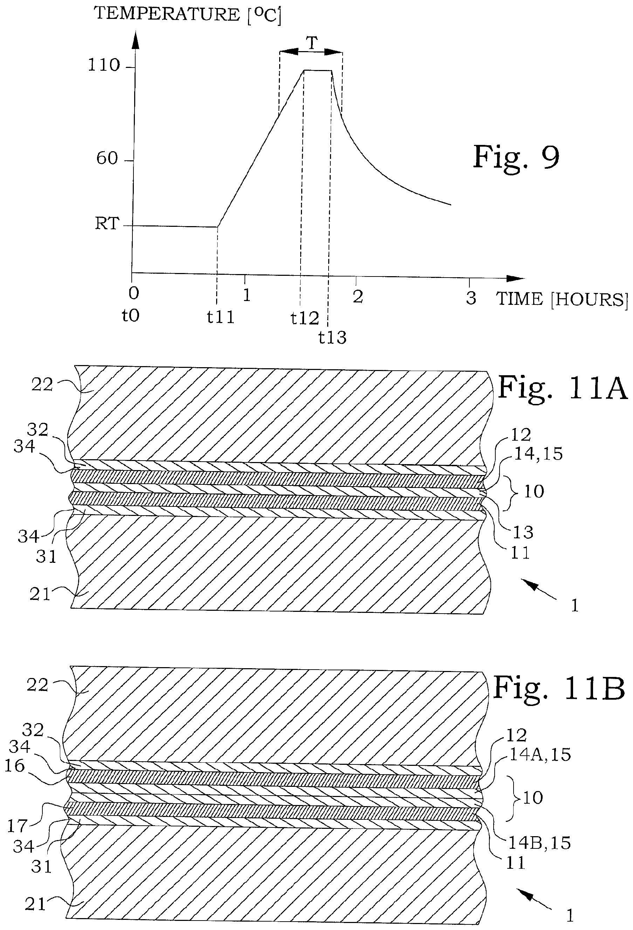

The procedure stack is somewhat similar to the procedure of Fig. 4. The pre-treatment in a vacuum bag is made in basically the same way, except for that the pumping only continues for about 45 minutes. Thereafter, the actual lamination temperature treatment started. The temperature treatment is illustrated by the diagram of Fig. 9. At time t0, the stack was sealed within the vacuum bag. At time t11, the vacuum bag with the stack was placed in an oven, if not already placed there, and a ramping of the temperature started. The temperature was ramped up relatively slowly to about 110°C during a time of about 45 minutes, until time tl2. The temperature was then kept at 110°C between times t12 and t13. After the hot lamination time period, the stack was optionally removed from the oven and from the vacuum bag and the stack was allowed to cool off. The stack was thus kept at a temperature of above 85°C during a hot lamination time period, denoted by T in the figure, which is slightly longer than 30 minutes, but at least clearly less than 40 minutes.

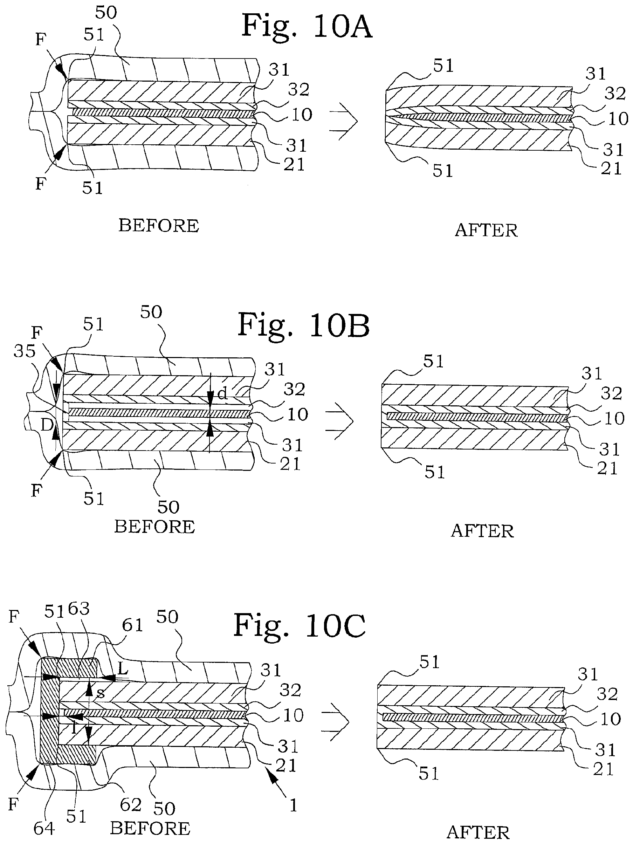

In some cases, when parts of the vacuum enclosure are provided in direct contact with the stack and in particular when the vacuum enclosure parts apply a force on the edges of the stack during the lamination heating, a slight deformation of the device may occur at the edges. The glass panes are thus bent somewhat inwards, causing a deformation of the interlayer films and in some cases also the solid-electrochromic-layer layered polymer-based structure 10 itself. This is schematically illustrated in Fig. 10A, where the left part is the situation before heat treatment and the right part is the situation after. A part of a vacuum enclosure 50 is illustrated, applying a high force F at the edges 51 when vacuum is applied. Note that the bending and thickness differences are extremely exaggerated in the figure in order to visualize the effect. Such deformation of the solid-electrochromic-layer layered polymer-based structure 10 may result in changes in the direct appearance, such as distortion or variations in the transmittance change rate, but may also influence e.g. ageing properties. In some applications, such non-homogeneity appearing at the very edges of the ECD may not be very disadvantageous. However, in other applications, such non-homogeneities may be very disturbing.

There are a few approaches to mitigate these effects. In one embodiment, the vacuum, or rather the reduced pressure, around the stack is removed before the stack is cooled down below the lamination temperature or at least at an elevated temperature slightly below the lamination temperature. Since the pressure at the edges then is removed, this gives the stack a possibility to relax before the laminating films reach a temperature at which their plastic properties are reduced. The tensions in the glass panes will tend to straighten out the edges. In one embodiment, using an EVA based interlayer film, the heat treatment was performed at 110°C during less than 45 minutes. The vacuum was removed and the stack was allowed to decrease its temperature to about 85°C during a period of less than 30 minutes. This post-vacuum heating allowed the glass pane edges to relax to be parallel.

Another embodiment, which optionally may be combined with the first one, is to utilize the earlier mentioned material compensating rim. This is schematically illustrated in Fig. 10B. Since the pressure at the edges is somewhat higher than on the inner parts of the glass panes, during the lamination process, the edge parts of the inner layers are typically compressed more. By starting, as illustrated in the left part of 10B with a material compensating rim 35 that is somewhat thicker D than the thickness d of the solid-electrochromic-layer layered polymer-based structure 10, a higher compression may eventually end up with an edge thickness after lamination that is uniform, as illustrated in the right part of Fig. 10B. Note that the differences in thickness are extremely exaggerated in the figure, to illustrate the principle. This typically requires some trial and error experiments to reach the optimum thickness of the material compensating rim 35.

Another embodiment, for mitigating edge deformation, is based on the removal of the excess pressing force. To this end, a rigid structure can be provided around the edges of the stack during the heat lamination. This is schematically illustrated in 10C. A frame 64 is provided over the edge 52 of the stack 1. The frame 64 has a first plane portion 61 and a second plane portion 62 arranged parallel to each other at a distance s, which slightly exceeds the total thickness of the stack 1. The first plane portion 61 and the second plane portion 62 are arranged parallel to a main plane of the stack 1 on each side over the edge 51 of the stack 1. This ensures that the frame 64 easily can be mounted without damaging the stack. Therefore, typically, when mounted, there is a small gap 63 between at least one of the plane portions and the stack 1. The vacuum enclosure 50 is provided around the stack and the frame 64. The plane portions are mechanically fixed relative each other so that the distance s will not be considerably changed when a vacuum is applied. Possibly, there could be some anti-scratching portions provided between the plane portions and the stack 1, provided either at the inner surfaces of the plane portions 61, 62 or as a separate part. When vacuum is applied to the assembly, the vacuum enclosure 50 will apply the forces F at the corners of the frame 64. However, these forces are not reaching the edges of the stack 1. Preferably, the length L, by which the plane portions 61, 62 of the frame 64 covers the stack is larger than the distance 1 between the edge of the solid-electrochromic-layer layered polymer-based structure 10 and the main edge 51 of the stack. In other words, the frame 64 covers at least a part of the stack having the solid-electrochromic-layer layered polymer-based structure 10 in the middle. A typical size of the overlap can be in the order of 1 cm. The result, shown in the right part of the figure is a non-distorted edge of the stack 1.

In the embodiments above, EVA and PVB were used as interlayer films. It is also possible in alternative embodiments to use PolyUrethane and/or SENTRYGLAS®, a thermoform material from DuPont, as interlayer films. The preferred materials are presently believed to be ethylene vinyl acetate, polyvinyl butyral or polyurethane

It is also possible to use different materials as interlayer films against the two different glass panes. In one application, where the UV radiation is assumed to be high at the windows of a building, the interlayer film that is intended to be provided at the outdoor side of the laminated product can be selected to be an UV absorbing or UV reflecting interlayer film. This may protect the electrochromic layers and the inner interlayer film against UV damage. Since such films typically are more expensive than other types of interlayer films, the interlayer film that is intended to be provided at the indoor side of the laminated product can be selected differently. Two particular examples have been tested, one where a PVB Super UV cut interlayer film from Trosifol was used as outdoor-facing film and one where a Solar Control PVB film from Sekisui was used as outdoor-facing film.

In certain embodiments, the lamination process is utilized one step further. Instead of only using the interlayer films for providing adhesion between the solid-electrochromic-layer layered polymer-based structure and the glass panes, interlayer films can also be used also within the solid-electrochromic-layer layered polymer-based structure.

Fig. 11A illustrates schematically in a cross-sectional view an embodiment of a laminated electrochromic device 2. Note that the thicknesses of the different layers are not drawn in the same scale. In this laminated electrochromic device 2, interlayer films 31, 32 are as described above provided on each side of the solid-electrochromic-layer layered polymer-based structure 10 between two glass panes 21, 22. In this embodiment, however, the solid-electrochromic-layer layered polymer-based structure 10 comprises an upper half-cell 12 and a lower half-cell 11, between which an electrolyte layer 13 is provided. In preferred embodiments, the half cells 11, 12 comprise a polymer sheet covered with an electron conducting layer and a solid electrochromic layer or solid counter electrode layer, respectively. In the present embodiment, the electrolyte layer 13 is an ion conducting interlayer film 14. In this particular embodiment, the electrolyte layer 13 comprises an ion conducting PVB interlayer film 15.

An advantage with such a set-up is that the half-cells 11, 12 can be provided as large sheets or rolls, which can be cut into appropriate pieces for the glass pane application and arranged in a stack 1, with an ion conducting interlayer film 14 in-between. This has the advantage that it can be performed by most standard glass lamination equipments, e.g. by companies in the traditional glass lamination industry. The electrolyte action of the interlayer film 14 may be somewhat less optimized than other types of electrolyte layers. However, in many applications, the electrolyte action of the interlayer film 14 is at least sufficient. The easiness of production may thereby lower the total production costs significantly.

In many applications, the solid electrochromic material and the counter electrode material prefer a pH in the environment that is either acid or basic in order to operate at its optimum. In a typical case, e.g. using tungsten oxide as electrochromic layer and nickel oxide as counter electrode layer, the tungsten oxide performs very well in contact with acidic electrolytes, whereas the nickel oxide performs very well in contact with basic electrolytes. In a further embodiment, schematically illustrated in Fig. 11B, two interlayer films 14A and 14B are provided between the half-cells 11, 12. Note that the thicknesses of the different layers are not drawn in the same scale. The upper half-cell 12 is in this embodiment a half-cell comprising tungsten oxide 16 as electrochromic material. A slightly acidic interlayer film 14A is provided against the surface of the tungsten oxide 16. The lower half-cell 11 is in this embodiment a half-cell comprising nickel oxide 17 as counter electrode material. A slightly basic interlayer film 14B is provided against the surface of the nickel oxide 17. In this way, one may optimize the performance of the oxides, making it possible to utilize the full potential of both oxide material.

In the interface between the interlayer films 14A and 14B, there will probably be some minor neutralization reactions. However, since the reactions will not alter the electrochromic properties of the half-cells and probably only influence the electrolytic properties marginally, the total performance of the electrochromic device will be improved. Further improvements may comprise the inclusion of a third, neutral interlayer film between the basic interlayer film 14A and the acid interlayer film 14B, functioning as an extra barrier.

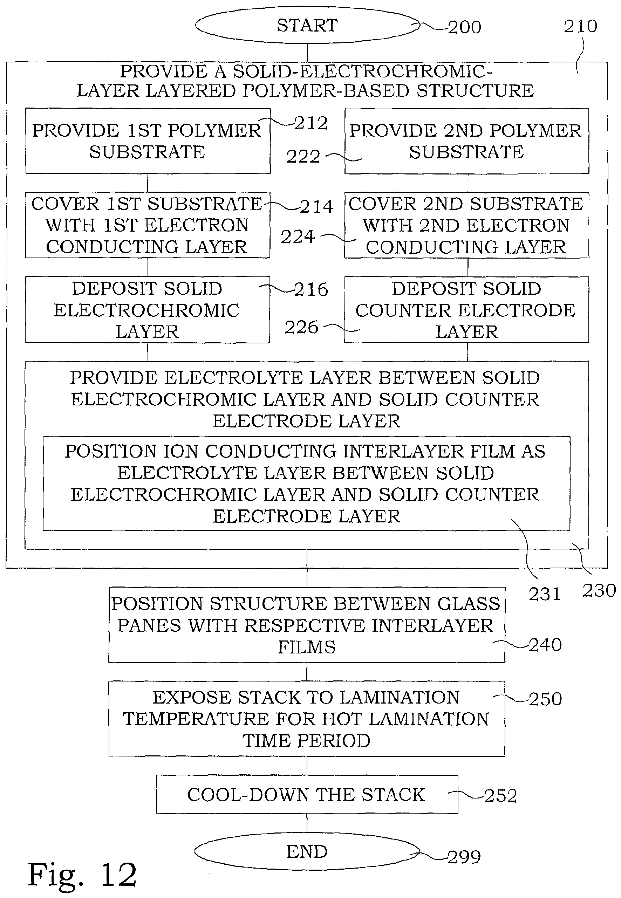

An embodiment of method for manufacturing such electrochromic devices with an ion conducting interlayer film as electrode layer, illustrated as a flow diagram in Fig. 12, follows the main lines from e.g. according to Figs. 1 and 2. However, step 230 comprises the part step 231 of positioning at least one ion conducting interlayer film 14 between the first electrochromic layer and the counter electrode layer, as an electrolyte layer.

In further embodiments, also the contacting can be made a part of the lamination process. Contacting has previously been performed by attaching electrodes to the electron conducting layers, typically by soldering the electrodes onto bare areas of the electron conducting layers. These bare areas, free from electrochromic material, counter electrode material or electrolyte, are either provided directly in the process of providing the solid-electrochromic-layer layered polymer-based structure or are created afterwards in the final structure. In many applications, it is difficult to know exactly where these bare areas are going to be placed, which makes the approach of providing them at the same time as the solid-electrochromic-layer layered polymer-based structure becomes troublesome. The processes of creating bare surfaces of the electron conducting layers afterwards have also large difficulties, since the active layers in the middle of the solid-electrochromic-layer layered polymer-based structure are very thin. Removing electrochromic material, counter electrode material or electrolyte without damaging the electron conducting layers is a delicate task, requiring very careful handling.

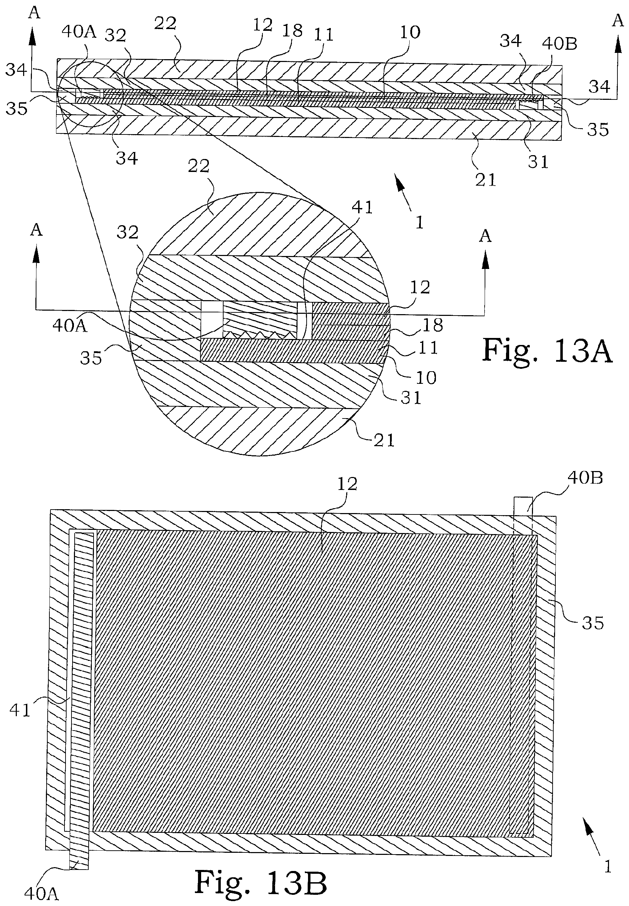

In certain embodiments a new approach of providing contacts, integrated in the lamination process, is applied. Fig. 13A illustrates schematically, in a cross-sectional view, a stack 1 ready for the lamination process. As before, the solid-electrochromic-layer layered polymer-based structure 10 is provided between two glass panes 21, 22 with interlayer films 31, 32 provided therebetween. Note that the thicknesses of the different layers are not drawn in the same scale. The solid-electrochromic-layer layered polymer-based structure 10 comprises a first half-cell 11 and a second half-cell 12 connected by an electrolyte layer 18. In some areas, illustrated e.g. by the bare surface 41 in the enlarged portion of Fig. 13A, the half-cells and/or electrolyte layer do not completely cover each other. In the enlarged portion of Fig. 13A, it can e.g. be seen that the first half-cell 11 protrudes laterally outside the electrolyte layer 18 and the second half-cell 12. The surface of the first half-cell 11 thus typically exposes a solid electrochromic layer. The bare surface 41 may also be arranged such that it directly exposes an electron conducting layer, however, this typically requires careful additional manufacturing steps.

A first electrode 40A is provided and is positioned against the electron conducting layer or the first solid electrochromic layer of the bare surface 41 of the first half-cell 11. Likewise, a second electrode 40B is provided and positioned against the second electron conducting layer or the counter electrode layer of a bare surface of the second half-cell 12. In a preferred embodiment, the electrodes 40A , 40B are provided against the first solid electrochromic layer and the counter electrode layer, respectively, thus avoiding the processes of providing a bare electron conducting layer surface. In a further preferred embodiment, the first electrode 40A has a rugged surface. The rugged surface of the first electrode 40A is positioned against the first solid electrochromic layer of the first half-cell 11. Analogously, the second electrode 40B also has a rugged surface and that rugged surface of the second electrode 40B is positioned against the counter electrode layer of the second half-cell 12. The rugged surfaces are illustrated in Fig. 13A as a jagged surface.

A cross-sectional view along the line A-A in Fig. 13A is depicted in Fig. 13B. Here it can be seen that the first electrode 40A is provided at one edge of the stack 1 and the second electrode 40B is provided at the opposite edge of the stack 1, however, in another lateral plane.

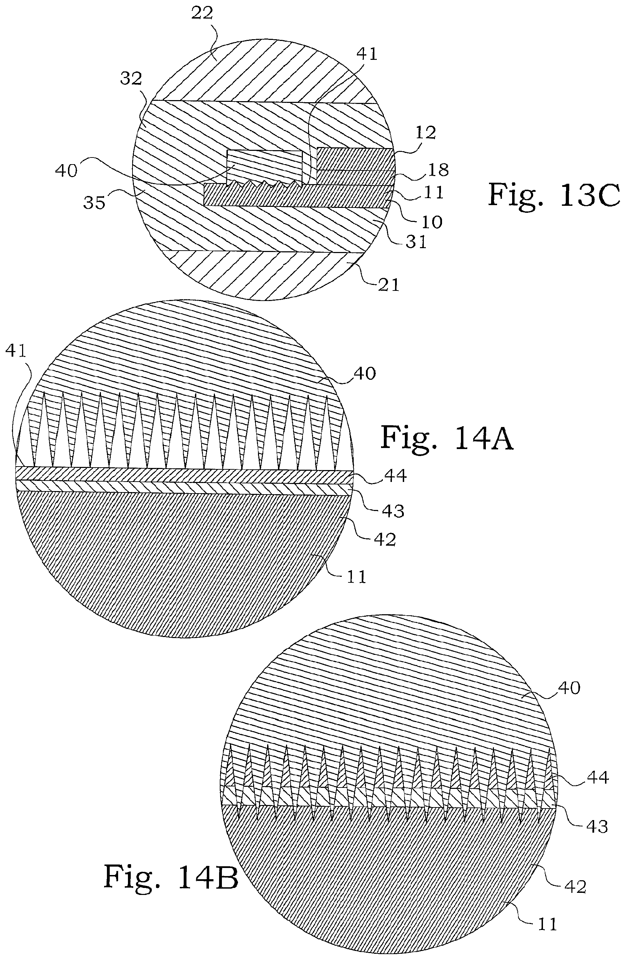

During the lamination treatment, the interlayer films 31, 32, 35 partially melts or at least deform and a pressure is applied across the stack 1. This causes the electrodes to penetrate into the bare surfaces, against which they originally were supported. At the same time, the material of the interlayer films tends to fill out the spaces around the electrodes. Fig. 13C illustrates an idealized situation after the lamination procedure. The electrode 40A here penetrates into the surface of the first half-cell 11 and the volumes around the electrode 40A are filled with material. Due to the penetration of the electrode 40A into the surface of the first half-cell 11, an electrical contact is established therebetween. Furthermore, the material filling at the same time acts for prohibiting the electrode 40A to be removed, i.e. provides a mechanical attachment. Note that this illustration is a strongly idealized situation.

In Fig. 14A, the situation of an idealized rugged electrode surface before lamination is illustrated. The surface of a polymer substrate 42 of the first half-cell 11 is covered with an electron conducting layer 43 and a solid electrochromic layer 44. After lamination, as illustrated in Fig. 14B. the electrode 40 has penetrated the surface of the first half-cell 11. The material of the electron conducting layer 43 and a solid electrochromic layer 44 is mechanically affected. At the same time an electrical contact between the electrode 40 and the parts of the electron conducting layer 43 that still is intact is established. The illustrations are extremely idealized. For instance, in a real case, also the surface of the electrode 40 will undergo mechanical shape changes. In a preferred embodiment, in order to safely establish the electrical contact, the rugged surfaces of the first and second electrode, respectively, have a surface roughness that at least 10 times larger than a thickness of the first solid electrochromic layer and the counter electrode layer, respectively. Even more preferably, the surface roughness is 100 times larger. The surface roughness is here defined as a depth difference between a highest and lowest surface portion.

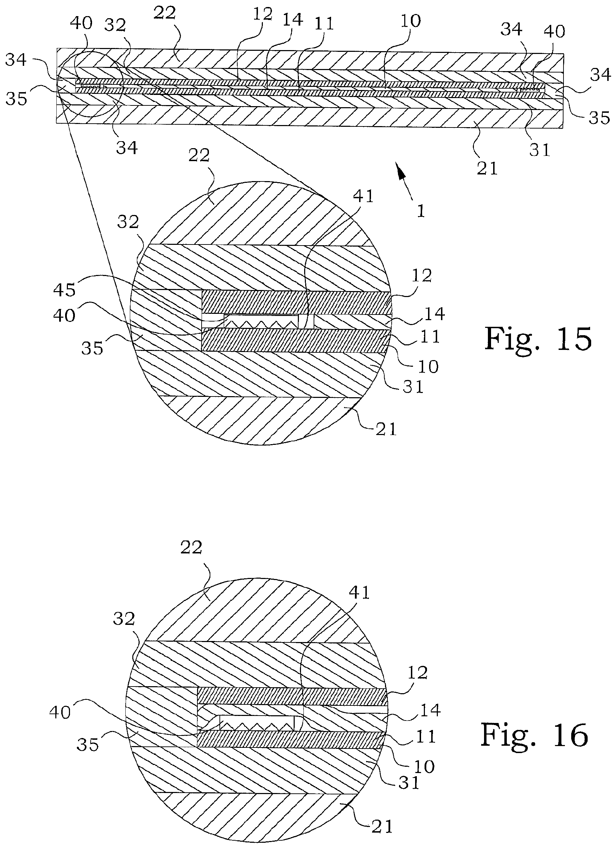

In one embodiment, where an interlayer film 14 is used as electrolyte layer, the provision of contacts can be performed as schematically illustrated in Fig. 15. Since the solid-electrochromic-layer layered polymer-based structure 10 here is provided as two separate half-cells 11, 12 and the interlayer film 14 is positioned therebetween in connection with the lamination, the electrodes 40 can be provided between the half-cells 11, 12. The half-cells 11, 12 have therefore not to be shaped with respect to the intended positions of the electrodes 40. Only the size of the interlayer film 14 is adapted. However, in order to not risking a short-circuit between the electron conducting layers in the half-cells 11, 12, the electrodes 40 are preferably provided with an electrically insulating cover 45 at the side opposite to the rugged electrode surface.

Fig. 16 illustrates an alterative embodiment to the embodiment in Fig. 15. Here the interlayer film 14 is used for prohibiting a direct contact between the electrode 40 and the opposite half-cell. The illustration is intended to illustrate the situation before lamination. During lamination, the interlayer film 14 will deform and fill most of the cavities around the electrode.

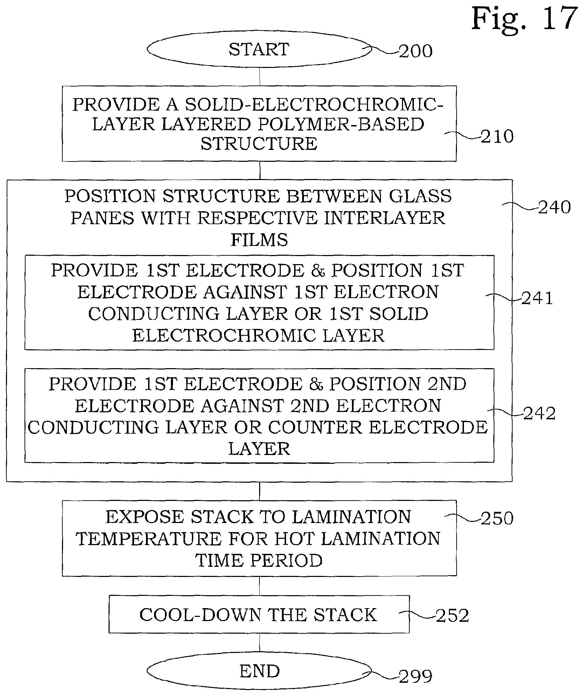

Fig. 17 is a flow diagram of steps of an embodiment of a lamination method incorporating contacting. The embodiment resembles the embodiment of Fig. 1. However, as part steps of the step 240 of positioning the solid-electrochromic-layer layered polymer-based structure between glass panes, two additional steps 241 and 242 are presented. In step 241, a first electrode is provided and positioned against a first electron conducting layer or first solid electrochromic layer of a first half-cell. In step 242, a second electrode is provided and positioned against a second electron conducting layer or solid counter electrode layer of a second half-cell.

The above manufacturing principles can also be used for producing laminated electrochromic devices with more than one solid-electrochromic-layer layered polymer-based structure. In an embodiment of a method for producing a double electrochromic layer device, the step of positioning 240 (Fig. 1) further comprises positioning of an additional solid-electrochromic-layer layered polymer-based structure between the glass panes. This is made by positioning additional solid-electrochromic-layer layered polymer-based structure on top of one of the interlayer films and by adding an interlayer film between the additional solid-electrochromic-layer layered polymer-based structure and the glass pane. In other words, an solid-electrochromic-layer layered polymer-based structure is attached to the first one, inside the glass panes. This gives a total stack that comprises more than one solid-electrochromic-layer layered polymer-based structure.

An embodiment of such a laminated electrochromic device thus comprises an additional solid-electrochromic-layer layered polymer-based structure and a third glass pane. The additional solid-electrochromic-layer layered polymer-based structure is laminated between the second glass pane and the third glass pane, with a respective interlayer film between each side of the additional solid-electrochromic-layer layered polymer-based structure and the second glass pane and the third glass pane, respectively.

As anyone skilled in the art realizes, more than two electrochromic layers in one and the same device can be accomplished in analogue ways by adding further solid-electrochromic-layer layered polymer-based structures and glass panes before the lamination.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A method for manufacturing of laminated electrochromic devices, comprising the steps of:
providing (210) a solid-electrochromic-layer layered polymer-based structure,
positioning (240) said solid-electrochromic-layer layered polymer-based structure between a first glass pane and a second glass pane, with a respective interlayer film between each side of said solid-electrochromic-layer layered polymer-based structure and said first glass pane and said second glass pane, respectively, forming a stack;
exposing (250) said stack to a lamination temperature, preferably being at most 120°C, for a hot lamination time period; and
cooling-down (252) of said stack at at least atmospheric pressure after said hot lamination time period;
**characterized in that** said step of providing a solid-electrochromic-layer layered polymer-based structure comprises the part steps of:
providing (212) a first polymer substrate sheet;
covering (214), at least partially, a side of said first polymer substrate sheet with a first electron conducting layer;
depositing (216) a first solid electrochromic layer for at least partially covering said first electron conducting layer;
providing (222) a second polymer substrate sheet;
covering (224), at least partially, a side of said second polymer substrate sheet with a second electron conducting layer;
depositing (226) a solid counter electrode layer for at least partially covering said second electron conducting layer; and
providing (230) an electrolyte layer between, and at least partially covering, said first electrochromic layer and said counter electrode layer;
and **in that** said electrolyte layer is an ion conducting interlayer film.

2. The method according to claim 1, **characterized in that** said electrolyte layer is an ion conducting interlayer film based on polyvinyl butyral.

3. The method according to claim 1 or 2, **characterized in that** said step of providing (210) a solid-electrochromic-layer layered polymer-based structure comprises the further part steps of:
providing (241) a first electrode and positioning said first electrode against at least one of said first electron conducting layer and said first solid electrochromic layer; and
providing (242) a second electrode and positioning said second electrode against at least one of said second electron conducting layer and said counter electrode layer.

4. The method according to claim 3, **characterized in that** said first electrode is positioned against said first solid electrochromic layer and said second electrode is positioned against said counter electrode layer, said first electrode has a rugged surface and **in that** said rugged surface of said first electrode is positioned against said first solid electrochromic layer and said second electrode has a rugged surface and **in that** said rugged surface of said second electrode is positioned against said counter electrode layer.

5. The method according to any of the claims 1 to 4, **characterized in that** said respective interlayer film between each side of said solid-electrochromic-layer layered polymer-based structure and said first glass pane and said second glass pane, respectively, is based on at least one material selected from the list of ethylene vinyl acetate, polyvinyl butyral, SENTRYGLAS® and polyurethane, and said step of exposing said stack to a lamination temperature is performed at a reduced pressure, preferably below 600 mbar, more preferably below 100 mbar and most preferably below 20 mbar.

6. The method according to claim 5, **characterized in that** said step of providing (210) said solid-electrochromic-layer layered polymer-based structure comprises providing of a material compensating rim between said first glass pane and said second glass pane, encompassing said solid-electrochromic-layer layered polymer-based structure, wherein a thickness of said material compensating rim 35 is thicker than a thickness of said solid-electrochromic-layer layered polymer-based structure.

7. The method according to claim 5, **characterized by** the further step of providing a first plane portion and a second plane portion parallel to a main plane of said stack on each side over the edge of said stack before said step of exposing (250) said stack to a lamination temperature, said first plane portion and said second plane portion being mechanically fixed relative each other

8. The method according to any of the claims 1 to 4, **characterized in that** said interlayer film is based on polyvinyl butyral, and said step of exposing said stack to a lamination temperature is performed at an increased pressure, preferably above 8 bar, more preferably above 10 bar.

9. The method according to any of the claims 1 to 8, **characterized in that** said step of positioning (240) further comprises positioning of an additional solid-electrochromic-layer layered polymer-based structure onto one of the interlayer films and another interlayer film between said additional solid-electrochromic-layer layered polymer-based structure and said second glass pane or said third glass pane, respectively, whereby said stack comprises more than one solid-electrochromic-layer layered polymer-based structure.

10. A laminated electrochromic device, comprising:
a solid-electrochromic-layer layered polymer-based structure (10);
a first glass pane (21);
a second glass pane (22);
wherein said solid-electrochromic-layer layered polymer-based structure (10) being laminated between said first glass pane (21) and said second glass pane (22), with a respective interlayer film (31, 32) between each side of said solid-electrochromic-layer layered polymer-based structure (10) and said first glass pane (21) and said second glass pane (22), respectively,
**characterized in that** said solid-electrochromic-layer layered polymer-based structure (10) comprises:
a first polymer substrate sheet (42);
a first electron conducting layer (43) at least partially covering a side of said first polymer substrate sheet (42);
a first solid electrochromic layer (44) deposited for at least partially covering said first electron conducting layer (43);
a second polymer substrate sheet;
a second electron conducting layer at least partially covering a side of said second polymer substrate sheet;
a solid counter electrode layer deposited for at least partially covering said second electron conducting layer; and
an electrolyte layer (18, 13) provided between, and at least partially covering, said first electrochromic layer (43) and said counter electrode layer;
and **in that** said electrolyte layer (13) is an ion conducting interlayer film (15).

11. The laminated electrochromic device according to claim 10, **characterized in that** said electrolyte layer (13) is an ion conducting interlayer film (15) based on polyvinyl butyral.

12. The laminated electrochromic device according to claim 10 or 11, **characterized by** a first electrode (40A) positioned against said first solid electrochromic layer (44) and a second electrode (40B) positioned against said counter electrode layer, said first electrode (40A) has a rugged surface and in that said rugged surface of said first electrode is positioned against said first solid electrochromic layer (44) and said second electrode (40B) has a rugged surface and in that said rugged surface of said second electrode is positioned against said counter electrode layer.

13. The laminated electrochromic device according to any of the claims 10 to 12, **characterized by** further comprising an additional solid-electrochromic-layer layered polymer-based structure and a third glass pane, wherein said additional solid-electrochromic-layer layered polymer-based structure being laminated between said second glass pane (22) and said third glass pane, with a respective interlayer film between each side of said additional solid-electrochromic-layer layered polymer-based structure and said second glass pane (22) and said third glass pane, respectively.

## Patentansprüche

1. Verfahren zum Herstellen laminierter elektrochromer Vorrichtungen, umfassend die folgenden Schritte:
Bereitstellen (210) einer mit einer festen elektrochromen Schicht versehenen Schichtstruktur auf Polymerbasis,
Positionieren (240) der mit einer festen elektrochromen Schicht versehenen Schichtstruktur auf Polymerbasis zwischen einer ersten Glasscheibe und einer zweiten Glasscheibe, mit einem jeweiligen Zwischenschichtfilm zwischen jeder Seite der mit einer festen elektrochromen Schicht versehenen Schichtstruktur auf Polymerbasis und der ersten Glasscheibe beziehungsweise der zweiten Glasscheibe, wodurch ein Stapel gebildet wird;
Aussetzen (250) des Stapels einer Laminierungstemperatur, die vorzugsweise höchstens 120 °C beträgt, über einen Heißlaminierungszeitraum; und
Abkühlen (252) des Stapels mindestens bei Umgebungsdruck nach dem Heißlaminierungszeitraum;
**dadurch gekennzeichnet, dass** der Schritt des Bereitstellens einer mit einer festen elektrochromen Schicht versehenen Schichtstruktur auf Polymerbasis die folgenden Teilschritte umfasst:
Bereitstellen (212) einer ersten Polymersubstratfolie;
Bedecken (214) einer Seite der ersten Polymersubstratfolie mindestens teilweise mit einer ersten elektronenleitenden Schicht;
Anordnen (216) einer ersten festen elektrochromen Schicht, so dass sie zumindest teilweise die erste elektronenleitende Schicht bedeckt;
Bereitstellen (222) einer zweiten Polymersubstratfolie;
Bedecken (224) einer Seite der zweiten Polymersubstratfolie mindestens teilweise mit einer zweiten elektronenleitenden Schicht;
Anordnen (226) einer festen Gegenelektrodenschicht, so dass sie zumindest teilweise die zweite elektronenleitende Schicht bedeckt; und
Bereitstellen (230) einer Elektrolytschicht zwischen der ersten elektrochromen Schicht und der Gegenelektrodenschicht, so dass sie diese mindestens teilweise bedeckt;
und dadurch, dass die Elektrolytschicht ein ionenleitender Zwischenschichtfilm ist.

2. Verfahren nach Anspruch 1, **dadurch gekennzeichnet, dass** die Elektrolytschicht ein ionenleitender Zwischenschichtfilm ist, der auf Polyvinylbutyral basiert.

3. Verfahren nach Anspruch 1 oder 2, **dadurch gekennzeichnet, dass** der Schritt des Bereitstellens (210) einer mit einer festen elektrochromen Schicht versehenen Schichtstruktur auf Polymerbasis die weiteren folgenden Teilschritte umfasst:
Bereitstellen (241) einer ersten Elektrode und Anordnen der ersten Elektrode an mindestens einer von der ersten elektronenleitenden Schicht und der ersten festen elektrochromen Schicht; und
Bereitstellen (242) einer zweiten Elektrode und Anordnen der zweiten Elektrode an mindestens einer von der zweiten elektronenleitenden Schicht und der Gegenelektrodenschicht.

4. Verfahren nach Anspruch 3, **dadurch gekennzeichnet, dass** die erste Elektrode an der ersten festen elektrochromen Schicht angeordnet ist und die zweite Elektrode an der Gegenelektrodenschicht angeordnet ist, dass die erste Elektrode eine raue Oberfläche aufweist, und dadurch, dass die raue Oberfläche der ersten Elektrode an der ersten festen elektrochromen Schicht angeordnet ist und die zweite Elektrode eine raue Oberfläche aufweist und dass die raue Oberfläche der zweiten Elektrode an der Gegenelektrodenschicht angeordnet ist.

5. Verfahren nach einem der Ansprüche 1 bis 4, **dadurch gekennzeichnet, dass** der entsprechende Zwischenschichtfilm zwischen jeder Seite der mit einer festen elektrochromen Schicht versehenen Schichtstruktur auf Polymerbasis und der ersten Glasscheibe beziehungsweise der zweiten Glasscheibe auf mindestens einem Material basiert, das aus der Liste aus Ethylenvinylacetat, Polyvinylbutyral, SENTRYGLAS® und Polyurethan ausgewählt ist, und der Schritt des Aussetzens des Stapels einer Laminierungstemperatur bei einem verringerten Druck durchgeführt wird, vorzugsweise unter 600 mbar, besonders bevorzugt unter 100 mbar und am stärksten bevorzugt unter 20 mbar.

6. Verfahren nach Anspruch 5, **dadurch gekennzeichnet, dass** der Schritt des Bereitstellens (210) der mit einer festen elektrochromen Schicht versehenen Schichtstruktur auf Polymerbasis das Bereitstellen eines materialausgleichenden Rands zwischen der ersten Glasscheibe und der zweiten Glasscheibe umfasst, der die mit einer festen elektrochromen Schicht versehene Schichtstruktur auf Polymerbasis umgibt, wobei eine Dicke des materialausgleichenden Rands 35 dicker ist als eine Dicke der mit einer festen elektrochromen Schicht versehenen Schichtstruktur auf Polymerbasis.

7. Verfahren nach Anspruch 5, **gekennzeichnet durch** den weiteren Schritt des Bereitstellens eines ersten ebenen Abschnitts und eines zweiten ebenen Abschnitts parallel zu einer Hauptebene des Stapels an jeder Seite über der Kante des Stapels vor dem Schritt des Aussetzens (250) des Stapels einer Laminierungstemperatur, wobei der erste ebene Abschnitt und der zweite ebene Abschnitt mechanisch in Bezug aufeinander befestigt sind.

8. Verfahren nach einem der Ansprüche 1 bis 4, **dadurch gekennzeichnet, dass** der Zwischenschichtfilm auf Polyvinylbutyral basiert und der Schritt des Aussetzens des Stapels einer Laminierungstemperatur bei einem erhöhten Druck durchgeführt wird, vorzugsweise über 8 bar, besonders bevorzugt über 10 bar.

9. Verfahren nach einem der Ansprüche 1 bis 8, **dadurch gekennzeichnet, dass** der Schritt des Anordnens (240) ferner das Anordnen einer zusätzlichen mit einer festen elektrochromen Schicht versehenen Schichtstruktur auf Polymerbasis auf einem von den Zwischenschichtfilmen und eines weiteren Zwischenschichtfilms zwischen der zusätzlichen mit einer festen elektrochromen Schicht versehenen Schichtstruktur auf Polymerbasis und der zweiten Glasscheibe beziehungsweise der dritten Glasscheibe umfasst, wodurch der Stapel mehr als eine mit einer festen elektrochromen Schicht versehenen Schichtstruktur auf Polymerbasis umfasst.

10. Laminierte elektrochrome Vorrichtung, umfassend:
eine mit einer festen elektrochromen Schicht versehene Schichtstruktur auf Polymerbasis (10) ;
eine erste Glasscheibe (21);
eine zweite Glasscheibe (22);
wobei die mit einer festen elektrochromen Schicht versehene Schichtstruktur auf Polymerbasis (10) zwischen der ersten Glasscheibe (21) und der zweiten Glasscheibe (22) mit einem jeweiligen Zwischenschichtfilm (31, 32) zwischen jeder Seite der mit einer festen elektrochromen Schicht versehenen Schichtstruktur auf Polymerbasis (10) und der ersten Glasscheibe (21) beziehungsweise der zweiten Glasscheibe (22) laminiert ist, **dadurch gekennzeichnet, dass** die mit einer festen elektrochromen Schicht versehene Schichtstruktur auf Polymerbasis (10) Folgendes umfasst:
eine erste Polymersubstratfolie (42);
eine erste elektronenleitende Schicht (43), die mindestens teilweise eine Seite der ersten Polymersubstratfolie (42) bedeckt;
eine erste feste elektrochrome Schicht (44), die so angeordnet ist, dass sie zumindest teilweise die erste elektronenleitende Schicht (43) bedeckt;
eine zweite Polymersubstratfolie;
eine zweite elektronenleitende Schicht, die mindestens teilweise eine Seite der zweiten Polymersubstratfolie bedeckt;
eine feste Gegenelektrodenschicht, die so angeordnet ist, dass sie zumindest teilweise die zweite elektronenleitende Schicht bedeckt; und
eine Elektrolytschicht (18, 13), die zwischen der ersten elektrochromen Schicht (43) und der Gegenelektrodenschicht angeordnet ist, so dass sie diese mindestens teilweise bedeckt;
und dadurch, dass die Elektrolytschicht (13) ein ionenleitender Zwischenschichtfilm (15) ist.

11. Laminierte elektrochrome Vorrichtung nach Anspruch 10, **dadurch gekennzeichnet, dass** die Elektrolytschicht (13) ein ionenleitender Zwischenschichtfilm (15) ist, der auf Polyvinylbutyral basiert.

12. Laminierte elektrochrome Vorrichtung nach Anspruch 10 oder 11, **gekennzeichnet durch** eine erste Elektrode (40A), die an der ersten festen elektrochromen Schicht (44) angeordnet ist, und eine zweite Elektrode (40B), die an der Gegenelektrodenschicht angeordnet ist, dadurch dass die erste Elektrode (40A) eine raue Oberfläche aufweist und dass die raue Oberfläche der ersten Elektrode an der ersten festen elektrochromen Schicht (44) angeordnet ist und die zweite Elektrode (40B) eine raue Oberfläche aufweist, und **dadurch, dass** die raue Oberfläche der zweiten Elektrode an der Gegenelektrodenschicht angeordnet ist.

13. Laminierte elektrochrome Vorrichtung nach einem der Ansprüche 10 bis 12, **dadurch gekennzeichnet, dass** sie ferner eine zusätzliche mit einer festen elektrochromen Schicht versehene Schichtstruktur auf Polymerbasis und eine dritte Glasscheibe umfasst, wobei die zusätzliche mit einer festen elektrochromen Schicht versehene Schichtstruktur auf Polymerbasis zwischen der zweiten Glasscheibe (22) und der dritten Glasscheibe laminiert ist, mit einem jeweiligen Zwischenschichtfilm zwischen jeder Seite der zusätzlichen mit einer festen elektrochromen Schicht versehenen Schichtstruktur auf Polymerbasis und der zweiten Glasscheibe (22) beziehungsweise der dritten Glasscheibe.

## Revendications

1. Procédé de fabrication de dispositifs électrochromiques stratifiés, comprenant les étapes suivantes :
la fourniture (210) d'une structure à base d'un polymère stratifié à couche électrochromique solide,
le positionnement (240) de ladite structure à base d'un polymère stratifié à couche électrochromique solide entre un premier panneau de verre et un deuxième panneau de verre, avec un film intercouche respectif entre chaque côté de ladite structure à base d'un polymère stratifié à couche électrochromique solide et ledit premier panneau de verre et ledit deuxième panneau de verre, respectivement, formant un empilement ;
l'exposition (250) dudit empilement à une température de stratification, de préférence d'au plus 120 °C, pendant une période de temps de stratification à chaud ; et
le refroidissement (252) dudit empilement à au moins la pression atmosphérique après ladite période de temps de stratification à chaud ;
**caractérisé en ce que** ladite étape de fourniture d'une structure à base d'un polymère stratifié à couche électrochromique solide comprend les étapes partielles suivantes :
la fourniture (212) d'une première feuille de substrat polymère ;
le recouvrement (214), au moins en partie, d'un côté de ladite première feuille de substrat polymère avec une première couche conductrice d'électrons ;
le dépôt (216) d'une première couche électrochromique solide pour recouvrir au moins en partie ladite première couche conductrice d'électrons ;
la fourniture (222) d'une seconde feuille de substrat polymère ;
le recouvrement (224), au moins en partie, d'un côté de ladite seconde feuille de substrat polymère avec une seconde couche conductrice d'électrons ;
le dépôt (226) d'une couche solide de contre-électrode pour recouvrir au moins en partie ladite seconde couche conductrice d'électrons ; et
la fourniture (230) d'une couche d'électrolyte entre, et recouvrant au moins en partie, ladite première couche électrochromique et ladite couche de contre-électrode ;
et **en ce que** ladite couche d'électrolyte est un film intercouche conducteur d'ions.

2. Procédé selon la revendication 1, **caractérisé en ce que** ladite couche d'électrolyte est un film intercouche conducteur d'ions à base d'un butyral polyvinylique.

3. Procédé selon la revendication 1 ou 2, **caractérisé en ce que** ladite étape de fourniture (210) d'une structure à base d'un polymère stratifié à couche électrochromique solide comprend les étapes partielles supplémentaires suivantes :
la fourniture (241) d'une première électrode et le positionnement de ladite première électrode contre au moins l'une parmi ladite première couche conductrice d'électrons et ladite première couche électrochromique solide ; et
la fourniture (242) d'une seconde électrode et le positionnement de ladite seconde électrode contre au moins l'une parmi ladite seconde couche conductrice d'électrons et ladite couche de contre-électrode.

4. Procédé selon la revendication 3, **caractérisé en ce que** ladite première électrode est positionnée contre ladite première couche électrochromique solide et ladite seconde électrode est positionnée contre ladite couche de contre-électrode, ladite première électrode présente une surface rugueuse et **en ce que** ladite surface rugueuse de ladite première électrode est positionnée contre ladite première couche électrochromique solide et ladite seconde électrode présente une surface rugueuse et **en ce que** ladite surface rugueuse de ladite seconde électrode est positionnée contre ladite couche de contre-électrode.

5. Procédé selon l'une quelconque des revendications 1 à 4, **caractérisé en ce que** ledit film intercouche respectif entre chaque côté de ladite structure à base d'un polymère stratifié à couche électrochromique solide et ledit premier panneau de verre et ledit deuxième panneau de verre, respectivement, est à base d'au moins un matériau sélectionné dans la liste comprenant un éthylène-acétate de vinyle, un butyral polyvinylique, le SENTRYGLAS® et un polyuréthane, et ladite étape d'exposition dudit empilement à une température de stratification est effectuée à une pression réduite, de préférence inférieure à 600 mbar, de manière davantage préférée inférieure à 100 mbar et de manière préférée entre toutes inférieure à 20 mbar.

6. Procédé selon la revendication 5, **caractérisé en ce que** ladite étape de fourniture (210) de ladite structure à base d'un polymère stratifié à couche électrochromique solide comprend la fourniture d'un rebord de compensation de matériau entre ledit premier panneau de verre et ledit deuxième panneau de verre, englobant ladite structure à base d'un polymère stratifié à couche électrochromique solide, dans lequel une épaisseur dudit rebord de compensation de matériau 35 est plus épaisse qu'une épaisseur de ladite structure à base d'un polymère stratifié à couche électrochromique solide.

7. Procédé selon la revendication 5, **caractérisé par** l'étape supplémentaire de fourniture d'une première partie plane et d'une seconde partie plane parallèles à un plan principal dudit empilement de chaque côté sur le bord dudit empilement avant ladite étape d'exposition (250) dudit empilement à une température de stratification, ladite première partie plane et ladite seconde partie plane étant fixées mécaniquement l'une par rapport à l'autre.

8. Procédé selon l'une quelconque des revendications 1 à 4, **caractérisé en ce que** ledit film intercouche est à base d'un butyral polyvinylique, et ladite étape d'exposition dudit empilement à une température de stratification est effectuée à une pression accrue, de préférence supérieure à 8 bar, de manière davantage préférée supérieure à 10 bar.

9. Procédé selon l'une quelconque des revendications 1 à 8, **caractérisé en ce que** ladite étape de positionnement (240) comprend en outre le positionnement d'une structure à base d'un polymère stratifié à couche électrochromique solide supplémentaire sur l'un des films intercouches et un autre film intercouche entre ladite structure à base d'un polymère stratifié à couche électrochromique solide supplémentaire et ledit deuxième panneau de verre ou ledit troisième panneau de verre, respectivement, moyennant quoi ledit empilement comprend plus d'une structure à base d'un polymère stratifié à couche électrochromique solide.

10. Dispositif électrochromique stratifié, comprenant :
une structure (10) à base d'un polymère stratifié à couche électrochromique solide ;
un premier panneau de verre (21) ;
un deuxième panneau de verre (22) ;
dans lequel ladite structure (10) à base d'un polymère stratifié à couche électrochromique solide est stratifiée entre ledit premier panneau de verre (21) et ledit deuxième panneau de verre (22), avec un film intercouche respectif (31, 32) entre chaque côté de ladite structure (10) à base d'un polymère stratifié à couche électrochromique solide et ledit premier panneau de verre (21) et ledit deuxième panneau de verre (22), respectivement,
**caractérisé en ce que** ladite structure (10) à base d'un polymère stratifié à couche électrochromique solide comprend :
une première feuille de substrat polymère (42) ;
une première couche conductrice d'électrons (43) recouvrant au moins en partie un côté de ladite première feuille de substrat polymère (42) ;
une première couche électrochromique solide (44) déposée pour recouvrir au moins en partie ladite première couche conductrice d'électrons (43) ;
une seconde feuille de substrat polymère ;
une seconde couche conductrice d'électrons recouvrant au moins en partie un côté de ladite seconde feuille de substrat polymère ;
une couche solide de contre-électrode déposée pour recouvrir au moins en partie ladite seconde couche conductrice d'électrons ; et
une couche d'électrolyte (18, 13) fournie entre, et recouvrant au moins en partie, ladite première couche électrochromique (43) et ladite couche de contre-électrode ;
et **en ce que** ladite couche d'électrolyte (13) est un film intercouche conducteur d'ions (15).

11. Dispositif électrochromique stratifié selon la revendication 10, **caractérisé en ce que** ladite couche d'électrolyte (13) est un film intercouche conducteur d'ions (15) à base d'un butyral polyvinylique.

12. Dispositif électrochromique stratifié selon la revendication 10 ou 11, **caractérisé par** une première électrode (40A) positionnée contre ladite première couche électrochromique solide (44) et une seconde électrode (40B) positionnée contre ladite couche de contre-électrode, ladite première électrode (40A) présente une surface rugueuse et en ce que ladite surface rugueuse de ladite première électrode est positionnée contre ladite première couche électrochromique solide (44) et ladite seconde électrode (40B) présente une surface rugueuse et en ce que ladite surface rugueuse de ladite seconde électrode est positionnée contre ladite couche de contre-électrode.

13. Dispositif électrochromique stratifié selon l'une quelconque des revendications 10 à 12, **caractérisé en ce qu'**il comprend en outre une structure à base d'un polymère stratifié à couche électrochromique solide supplémentaire et un troisième panneau de verre, dans lequel ladite structure à base d'un polymère stratifié à couche électrochromique solide supplémentaire est stratifiée entre ledit deuxième panneau de verre (22) et ledit troisième panneau de verre, avec un film intercouche respectif entre chaque côté de ladite structure à base d'un polymère stratifié à couche électrochromique solide supplémentaire et ledit deuxième panneau de verre (22) et ledit troisième panneau de verre, respectivement.
